# EUROPÄISCHE PATENTSCHRIFT

(11) **EP 0 606 915 B1**
(45) Veröffentlichungstag und Bekanntmachung des Hinweises auf die Patenterteilung: **11.12.1996**
(21) Anmeldenummer: 94100457.4
(22) Anmeldetag: 13.01.1994
(51) Int. Cl.: H02K 15/04

(54) **Verfahren und Vorrichtung zur Herstellung einer Wellenwicklung**
Method and device to produce a wave winding
Procédé et dispositif pour fabriquer un enroulement ondulé

(30) Priorität: 14.01.1993 DE 4300764
(43) Veröffentlichungstag der Anmeldung: 20.07.1994
(73) Patentinhaber: Napierski, Reinhard, D-61194 Niddatal (DE)
(72) Erfinder: Napierski, Reinhard, D-61194 Niddatal (DE)
(74) Vertreter: Linser, Heinz

(56) Entgegenhaltungen:
- EP-A- 0 226 550
- US-A- 5 113 573
- PATENT ABSTRACTS OF JAPAN, unexamined applications, E Field, Band 12, Nr. 13 THE PATENT OFFICE JAPANESE GOVERNMENT page 48 E 573; & JP-A-62-171 438 (FUJITA)

## Beschreibung

Die Erfindung betrifft ein Verfahren zur Herstellung einer Wellenwicklung für Statoren elektrischer Maschinen, wobei ein Wicklungsdraht auf im Kreis angeordnete Formelemente gewickelt wird und zwischen den ersten und zweiten Formelementen eine Wellenform erhält, sowie eine Vorrichtung zur Durchführung des Verfahrens.

Es ist bei der Herstellung von Statoren vorherrschende Praxis, Spulen auf einer Schablone vorzufertigen, in einen Einzieher abzustreifen und dann axial in die Statornuten einzuziehen. Schwierigkeiten bereitet es, eine Wellenwicklung direkt über dem Einziehwerkzeug oder Übertragungswerkzeug herzustellen und zu übertragen.

Aus der DE-PS 33 43 390 sind ein Verfahren und eine Vorrichtung zum Wickeln und Einbringen einer Wellenwicklung in die Nuten von Statoren bekannt. Bei dieser Vorrichtung wird erst eine komplette Spule auf einen Satz im Kreis angeordnete erste Formelemente gewickelt, und anschließend fährt ein Satz zweiter Formelemente von außen gegen die Spule und verformt diese. Im gleichen Zug mit dem radialen Hub der zweiten Formelemente müssen die ersten Formelemente so lange nachgeben, bis eine Wellenwicklung geformt ist. Es sind auch noch weitere Veröffentlichungen bekannt, die ähnliche Konstruktionen aufweisen. Alle diese Vorrichtungen haben eines gemeinsam: sie wickeln erst eine annähernd runde Spule mit mehreren Windungen und verformen diese dann - alle Windungen gemeinsam - zu einer Wellenwicklung. Diese Methode ist sehr aufwendig und störanfällig, weil die Vorrichtung aus einer Vielzahl bewegbarer Teile besteht. Um eine gleichmäßige Qualität einer Wellenwicklung zu erhalten, müssen die ersten Formelemente mit den zweiten Formelementen beim Formen synchron verfahren oder mit aufwendigen Dämpfungszylindern ausgerüstet werden.

Aus der DE-AS 23 51 952 ist eine Vorrichtung zum Wickeln und Einbringen von Spulen in die Nuten von Statoren elektrischer Maschinen bekannt. Bei dieser Vorrichtung wird aus einem Förderrohr ein Wicklungsdraht kreisförmig auf sternförmig angeordnete erste und zweite Formelemente zu einer Wicklung gewickelt. Unterhalb der sternförmigen Anordnung der ersten und zweiten Formelemente ist eine Spuleneinziehvorrichtung angeordnet. Die ersten Formelemente bestehen aus einem die Wicklung tragenden Abschnitt und in einem Abstand darüber angeordnet einem Zugabschnitt. Die zweiten Formelemente sind im wesentlichen zylinderförmig ausgebildet und nach unten zur Spuleneinziehvorrichtung gebogen; sie ragen dabei zum Teil in das Innere des Kreises hinein, der von im Abstand nebeneinander angeordneten Fingern der Spuleneinziehvorrichtung gebildet wird. Nachdem eine Vorwicklung auf den ersten und zweiten Formelementen abgelegt bzw. erstellt worden ist, fahren die jeweils zwischen den zweiten Formelementen angeordneten ersten Formelemente nach unten, wobei im Verlaufe der abwärtsgerichteten Bewegung der Zugabschnitt innen in die Wicklung eingreift und diese nach unten zieht. Während der Abwärtsbewegung gleitet die Wicklung über die abwärtsgebogenen zweiten Formelemente hinab in Zwischenräume zwischen den Fingern der Spuleneinziehvorrichtung.

Auch bei diesem Beispiel ist nachteilig, daß die Hälfte der Formelemente beim Formungsvorgang verfährt und die Windungen nicht geordnet geformt werden; sondern die Windungen werden als Ringkneuel gewickelt, verfahren mit den ersten Formelementen und werden über die zweiten Formelemente gezogen. Hierbei verfächern die einzelnen Windungen unkontrolliert auf und können nur unter starkem Zug des ersten Formelements zwischen die Finger der Spuleneinziehvorrichtung gelangen. Es bedarf jedoch einer gewissen Ordnung bzw. Aneinanderreihung der Windungen um sicher zwischen die Finger einer Spuleneinziehvorrichtung zu gelangen.

Der Erfindung liegt deshalb die Aufgabe zugrunde, ein Verfahren der eingangs beschriebene Art und eine zu dessen Durchführung geeignete Vorrichtung zu schaffen, mit deren Hilfe die Herstellung von Wellenwicklungen vereinfacht und mit einer besseren Formgenauigkeit gefertigt und übertragen werden kann.

Vorstehende Aufgabe wird nach dem Vorschlag der Erfindung verfahrensgemäß dadurch gelöst, daß nach dem Wickeln mindestens einer Windung ein Abstreifhub diese Windung zwischen und axial entlang den ersten und den zweiten Formelementen verschiebt, wobei zu dem fortlaufenden Abstreifteilhub eine in der Wellenbildung sich verstärkende radiale Verformung der Windung erfolgt.

Die Erfindung bietet den Vorteil, daß jede einzelne Windung einer Wellenwicklung auf dem Weg von der Wickelebene zur Einziehvorrichtung immer kontrolliert geführt gehalten wird und somit eine gleichbleibende genaue Übergabe zwischen den Formelementen und den Lamellen des Einziehwerkzeugs gesichert ist. Die Windungen lassen sich auf sehr einfache Weise und sehr schnell und zuverlässig, in bevorzugter Ausführung der Erfindung mittels eines Abstreifers formen, der nach dem Wickeln mindestens einer Windung diese zwischen und axial entlang der ersten und dem zweiten Formelement verschiebt. Die Sicherheit beim Formvorgang wird dadurch erreicht, daß die beiden Formelemente beim Abstreifen fest stehen und so abgestimmt sind, daß Windungen eines bestimmten Umfangdurchmessers in jeder axialen Teilabstreifstellung radial und axial gehalten sind. Der radiale Halt erfolgt durch die beiden Formelemente, wobei der axiale Halt durch die Abstreifer und die Verformungsreibung entsteht.

Ein weiterer Vorteil besteht darin - bedingt durch das neue Herstellungsverfahren, bei dem nur gewickelt und abgestreift wird - daß nach Beendigung des Wickelvorgangs und Abstreifvorgangs bereits eine Wellenwicklung geformt ist. Sie braucht dann nur noch weiter in ein Einziehwerkzeug abgestreift zu werden.

Ein Abstreifhub kann in einem Zug von der Wickelebene bis ins Einziehwerkzeug oder in eine Übertragungszange erfolgen.

Bevorzugterweise ist - von der Wickelebene zum Einziehwerkzeug - zwischen und axial entlang den beiden Formelementen auf jeder neuen radialen Ebene der gleiche Umfang, jedoch eine sich verstärkende radiale Auslenkung, so daß aus einer fast kreisrunden Windung auf der Wickelebene im Einziehwerkzeug eine Wellenwindung wird.

Bei jedem fortlaufenden Abstreifteilhub nimmt die Windung eine neue radiale Stellung ein, wobei der Umfang der Windung erhalten bleibt.

Abgesehen von dem Verformungshub der Windung können unterschiedliche Wickelprinzipien angewendet werden. Ein mögliches Wickelprinzip ist kontinuierlich Wickeln und Abstreifen. Hierbei gelangen bereits während des Wickelns die Windungen zwischen die Formelemente. Beim Wickeln auf die ersten Formelemente wird die gewickelte Windung unmittelbar zwischen die Formelemente abgestreift und kommt außerhalb der ersten und innerhalb der zweiten Formelemente zu liegen. Sind alle Windungen gewickelt, erfolgt ein Abschlußhub und verformt die restlichen Windungen. Ein weiteres Wickelprinzip ist, daß eine Windungslage auf die ersten Formelemente ineinander gefahren sind, ein Abstreifhub erfolgt, der gleichzeitig der Formhub ist.

An der engsten Stelle zwischen den beiden Formelementen ist ein Mindestabstand von einem Windungsdrahtdurchmesser vorhanden, so daß eine Windung leicht zwischen den Formelementen abgestreift werden kann. Ein Maximalabstand wird von der Schlitzbreite zwischen den Einziehlamellen bestimmt. Er darf im Bereich des Einziehers nicht größer sein als seine Schlitze. Die beiden Formelemente sind im Bereich, der in das Einziehwerkzeug eintaucht, so ausgelegt, daß sie eine endgültige Wellenform aufweisen. Hierbei liegt eine Windung zwischen den Nocken und Fingern der Formelemente und bildet eine Wellenwicklung.

Der Abstreifer ist das einzige bewegliche Teil der Vorrichtung bei der Verformung der Windung und kann unterschiedlich gestaltet werden. Vorteilhaft sind Abstreifblätter, die sich in den Nocken und in den Fingern von dem jeweils größten zum kleinsten Durchmesser erstrecken. Diese Abstreifblätter können an Führungsstanden oder an einer Abstreiferplatte angeformt sein. Eine stabile Ausführung ist eine Abstreiferplatte, die zwischen die Formelemente paßt und Abstreiferblätter aufweist, die sich radial nach innen in den Nocken und radial nach außen in die Finger erstrecken.

Die Erfindung wird nachstehend anhand von in der Zeichnung dargestellten Ausführungsbeispielen näher erläutert. Hierbei zeigen:
- Fig. 1: eine Wickelvorrichtung für eine Wellenwicklung mit stehenden ersten Formelementen.
- Fig. 2: eine Draufsicht auf einen Aufnehmer mit Formelementen nach Fig. 1,
- Fig. 3: eine Wickelvorrichtung für eine Wellenwicklung mit drehenden ersten Formelementen,
- Fig. 4: eine Draufsicht auf einenAufnehmer mit Formelementen nach Fig. 3.

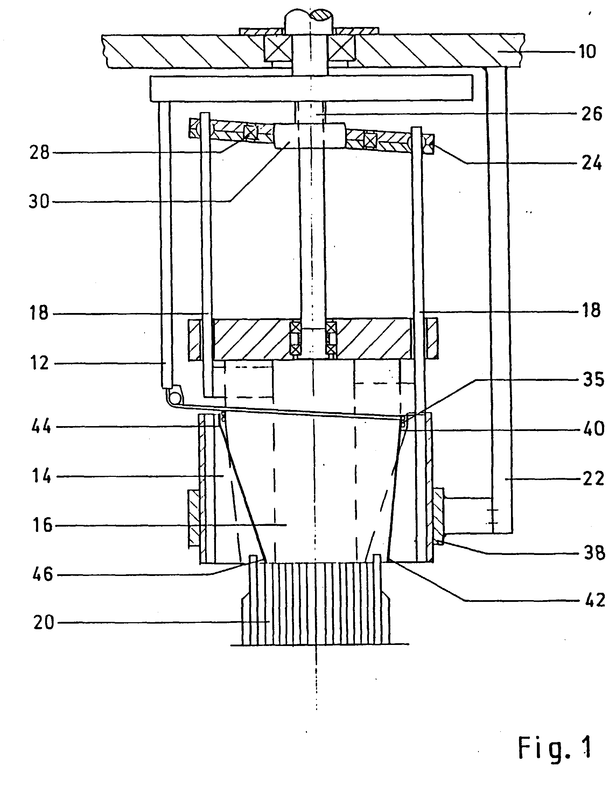

Die in Fig. 1 gezeigte Wickelvorrichtung hat ein Maschinengehäuse 10, an welchem die nachfolgend beschriebenen Teile gelagert bzw. angeschraubt sind. Die Wickelwerkzeuge bestehen aus einer rotierend antreibbaren Wickeldüse 12, mehreren während des Wickelvorgangs drehfest gehaltenen ersten Formelementer 14 mit Abstreifer 18 und einem Aufnehmer 20. Die zweiten Formelemente 16 sind über eine Traverse 22 mit dem Maschinengehäuse 10 verschraubt. Der Aufnehmer 20 kann eine Übertragungszange oder ein Einziehwerkzeug sein und wird der Wickelstation von Hand oder automatisch zugeführt. Nachdem der Aufnehmer 20 in der Wickelstation positioniert ist, verfährt er axial in die Formelemente 14 und 16. Die ersten Formelemente 14 und eine Taumelscheibe 24, in der die Abstreifer 18 gelagert sind, werden durch ein gebräuchliches, hier nicht gezeigtes Haltegetriebe gegen Verdrehung gehalten. Die Taumelscheibe 24 ist an einer drehbaren Welle 26, die mit der Wickeldüse 12 synchron dreht, angeflanscht, jedoch durch die Lagerung 28 gegen Mitdrehen getrennt. Über ein Kalottenlager 30 kann die Taumelscheibe 24 in ihrer Taumelbewegung, bzw. der Hub der Abstreifer 18 eingestellt werden.

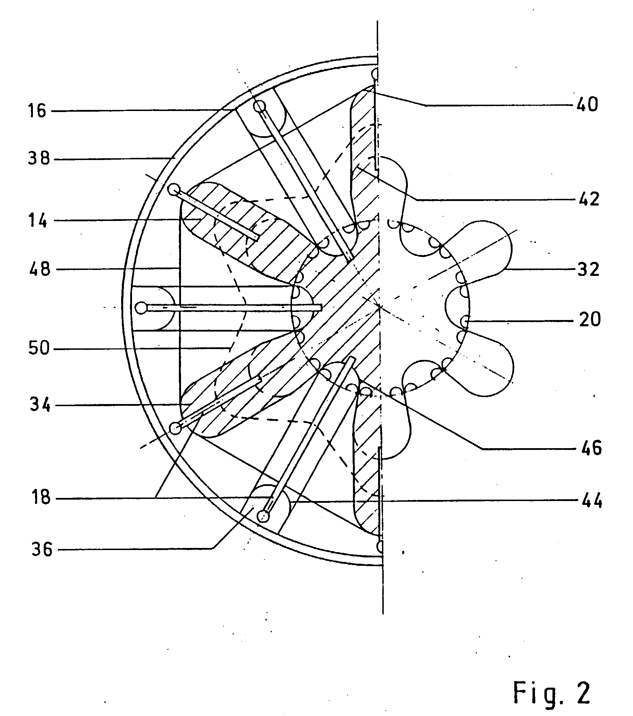

Fig 2 ist eine Draufsicht - geschnitten oberhalb der Abstreiferblätter - auf den Aufnehmer 20, wobei die linke Seite der Fig. 2 die Formelemente 14 und 16 mit den Abstreifern 18 und die rechte Seite eine bereits gewickelte und verformte Wellenwicklung 32 im Aufnehmer 20 zeigt. Die ersten Formelemente 14 sind einstückig hergestellt und haben im Beispielsfall am Umfang sechs Nocken 34, die sich von der Wickelebene 35 zum Aufnehmer 20 in ihrem äußeren Druchmesser verjüngen. Die zweiten Formelemente 16 haben dementsprechend auch sechs Finger 36, die sich ebenfalls vor der Wickelebene 35 zum Aufnehmer 20, jedoch in ihrem inneren Durchmesser, verjüngen. Die einzelnen Finger 36 sind mit einem Ring 38 fest verschraubt oder einstückig hergestellt. Die Finger 36 sind so im Kreis angeordnet, daß sie zwischen die Nocken 34 der ersten Formfinger 14 eingreifen; zwischen ihnen muß ein Abstand von mindestens einem Drahtdurchmesser sein. Um die Stellung der Finger 36 in der beschriebenen Position zu halten, ist der Ring 38 mit der Traverse 22 verschraubt. Die Abstreifer 18 erstrecken sich radial in den Nocken 34 der ersten Formelemente 14 vom größten Außendurchmesser 40 zum kleinsten Außendurchmesser 42, somit nur außerhalb des Aufnehmers 20, und bei den Fingern 36 der zweiten Formelemente 16 vom größten Innendurchmesser 44 zum kleinsten Innendurchmesser 46, hierbei von außerhalb des Aufnehmers 20 in seinen inneren Bereich. Eine andere Anordnung der Abstreifer 18 ist möglich, gewährleistet jedoch keinen optimalen Abstreifvorgang.

Während des Wickelns rotiert die Wickeldüse 12 um die ersten Formelemente 14 und legt den Draht 48 in form einer Windung im Bereich einer Wickelebene 35 auf die Nocken 34. Beim Wickeln werden die Windungen kontinuierlich durch die Abstreifer 18 entlang der ersten Formelemente 14 abgestreift. Der Abstreifhub, angetrieben durch die Taumelscheibe 24, ist etwas größer als der zu wickelnde Drahtdurchmesser, so daß die Wickelebene immer frei für die nächste Windung ist. Die zweiten Formelemente 16 sind mit ihrem größten Innendurchmesser 44 knapp unter der Wickelebene 35 angeordnet, so daß beim kontinuierlichen Wickeln und Abstreifen die abgestreiften Windungen unmittelbar von den Fingern 36 erfaßt bzw. geführt gehalten werden. Beim weiteren Wickeln wird eine Windung nach der anderen gewickelt und abgestreift. Die abgestreiften Windungen sind von innen durch die Nocken 34 und von außen durch die Finger 36 gehalten und werden durch die jeweils neuen abgestreiften Windungen weiter axial zum Aufnehmer 20 befördert. Eine Zwischenstellung des Drahtes 48 ist in Fig. 2 als gestrichelter Draht 50 gezeichnet. Die Endstellung ist, wenn der Draht 48 den Aufnehmer 20 erreicht hat und eine Wellenwindung 32 geformt ist. Ist die gewünschte Windungszahl erreicht, erfolgt ein Schlußhub der Abstreifer 18, wobei die Abstreifer 18 entlang der ersten und zweiten Formelemente 14, 16 axial von der Wickelebene 35 bis zum Aufnehmer 20 verfahren. Auf diesem Weg werden die restlichen Windungen abgestreift, wobei zu jeder fortlaufenden axialen Abstreifstellung eine in der Wellenbildung sich verstärkende radiale Verformung der Windung erfolgt. Bei kleiner Windungszahl ist es auch möglich, eine Lage von Windungen erst auf die ersten Formelemente 14 zu wickeln und dann mit einem Abstreifhub alle abzustreifen und sie hierbei zu verformen.

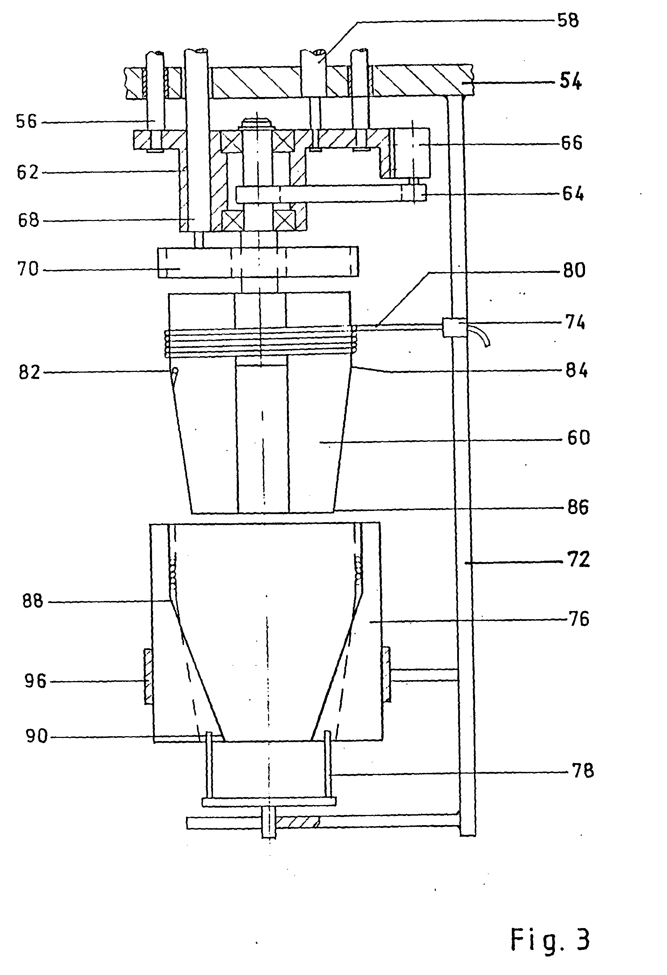

Die in Fig.3 gezeigte Wickelvorrichtung unterscheidet sich von der Fig. 1 in ihrer Anwendung nur dadurch, daß in Fig. 1 eine Wickeldüse um feststehende Formelemente rotiert und in Fig. 3 rotierende Formelemente den Wickeldraht aus einer relativ festen Verlegeeinheit herausziehen.

Fig. 3 zeigt eine Seitenansicht einer Wickelvorrichtung mit einem Maschinengehäuse 54, in dem eine Traverse 56 gelagert und ein Hubzylinder 58 eingespannt ist. Die ersten Formelemente 60 sind in einem Träger 62 drehbar gelagert und über einen Riementrieb 64 und Motor 66 antreibbar. Der Träger 62 ist mittels Traverse 56 geführt gehalten und durch den Hubzylinder 58 axial verschiebbar. Am Träger 62 ist ein Hubzylinder 68 fest eingespannt, der eine Abstreifplatte 70 axial verschieben kann. An einer Verstrebung 72, die zum Maschinengehäuse 54 gehört, ist eine Verlegeeinheit 74 - die axial entlang den ersten Formelementen 60 verfahrbar ist -, die zweiten Formelemente 76 und ein Spulenaufnehmer 78 befestigt. Die Achsen der drei Teile: erste Formelemente 60, zweite Formelemente 76 und Spulenaufnehmer 78 fluchten miteinander. Vor dem Wickeln einer Spule wird der Anfang eines Drahtes 80 in eine Fangnase 82 eingelegt, so daß beim Drehen der ersten Formelemente 60 der Draht 80 aus der Verlegeeinheit 74 gezogen wird. Die Konturen der Formelemente 60, 76 erstrecken sich axial beim ersten Formelement 60 von einem großen Außendurchmesser 84, der gleichzeitig Wickelebene ist, zu einem kleinen Außendurchmesser 86, und beim zweiten Formelemente 76 von einem großen Innendurchmesser 88 zu einem kleinen Inndendurchmesser 90.

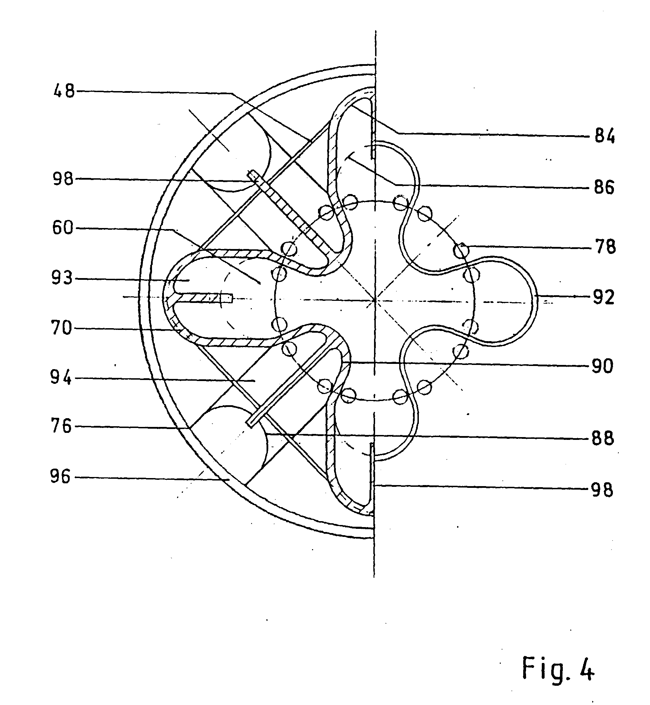

Fig. 4 zeigt eine Draufsicht - geschnitten durch die Abstreiferplatte 70 - der Vorrichtung nach Fig. 3, wobei die linke Seite die Formelemente 60 und 76 mit der Abstreiferplatte 70 und die rechte Seite eine bereits gewickelte und verformte Wellenwicklung 92 im Spulenaufnehmer 78 zeigt. Die ersten Formelemente 60 haben in diesem Ausführungsbeispiel vier Nocken 93, die sich von einem großen Außendurchmesser 84 zu einem kleinen Außendurchmesser 86 erstrecken. Die zweiten Formelemente 76 haben dementsprechend auch vier Finger 94, die sich ebenfalls von einem großen Innendurchmesser 88 zum kleinen Innendurchmesser 90 verjüngen. Die einzelnen Finger 94 sind mit einem Ring 96 verbunden und so angeordnet, daß sie zwischen die Nocken 93 der ersten Formelemente 60 eingreifen, so daß zwischen ihnen ein Abstand von mindestens einem Drahtdurchmesser sein muß. Um die Stellung der Finger 94 in dieser Position zu halten, ist der Ring 96 mit der Verstrebung 72 verschraubt. Die Abstreiferplatte 70 umschließt mit einem entsprechenden Spiel die ersten Formelemente 60 und erstreckt sich mit einem Abstreiferblatt 98 in die Nocken 93 und in die Finger 94 der zweiten Formelemente 76. Eine in Fig. 4 eingezeichnete Windung 48 liegt zwischen den Nocken 93 und den Fingern 94 und wird nach dem Abstreifhub zu einer Wellenwindung 92.

Die Arbeitsweise der Vorrichtung nach Fig. 3 und 4 beginnt mit dem Festlegen des Wickeldrahtanfangs an die Fangnase 82 der ersten Formelemente 60. Anschließend werden die ersten Formelemente 60 über den Riementrieb 64 und durch den Motor 66 in Drehung versetzt, und hierdurch wird zwangsläufig der Wickeldraht 80 aus der Verlegeeinheit 74 gezogen. Damit der Wickeldraht nacheinander aufgewickelt wird, verfährt die Verlegeeinheit 74 entsprechend dem Drahtdurchmesser axial entlang den ersten Formelementen 60. Jetzt wird der Wickeldraht mit einem Klemm- und Abschneidmesser - nicht gezeigt - abgeschnitten und festgehalten. Nach dem Wickelvorgang kann der Verformungsvorgang erfolgen. Hierzu wird der Träger 62 angetrieben durch den Hubzylinder 58 axial verfahren und nimmt hierbei die ersten Formelemente 60 und die Abstreiferplatte 70 mit. Die ersten Formelemente 60 tauchen in die zweiten Formelemente 76 ein und bleiben in einer unteren Stellung - in Fig. 3 gestrichelt angedeutet - stehen. In dieser Stellung fährt der axial gegenüber angeordnete Spulenaufnehmer 78 in beide Formelemente 60, 76 ein und bildet mit diesen eine Einheit. In dieser Stellung sind die aufgewickelten Windungen auch von den zweiten Formelementen 76 erfaßt und geführt gehalten. Synchron mit dem Abtauchen der ersten Formelemente 60 verfährt auch das nicht gezeigte Klemm- und Abschneidmesser und kann in dieser Position den Zug auf die Wicklung nachlassen, einerseits weil die Windungen bereits geführt gehalten sind, und anderseits können die Windungen im relativ lockeren Zustand besser abgestreift werden. Anschließend erfolgt ein Abstreifhub, der gleichzeitig ein Verformungshub des Wickeldrahtes ist. Die Abstreiferplatte 70 wird durch den Hubzylinder 68 axial zwischen die Formelemente 60, 76 verschoben, wobei hierdurch die Windungen zwischen und axial entlang den ersten und den zweiten Formelementen 60, 76 verschoben und gleichzeitig zu einer Wellenwindung verformt werden. Durch diesen Abstreifhub wird auch der Drahtanfang aus der Fangnase 82 abgestreift. Auf dem Verformungsweg, der sich zwischen der Wickelebene 84 und dem Spulenaufnehmer 78 ersteckt, ist insbesondere bei dickem Wickeldraht jede Windung hintereinander aufgereiht, und die Abstreiferplatte 70 überträgt die Abstreiferkraft nur auf den zuletzt gewickelten bzw. den ersten Wickeldraht vor der Abstreiferplatte 70. Die Abstreiferkraft wirkt auf und über die einzelnen Windungen davor und schiebt sie in den Spulenaufnehmer. Nachdem der Spulenaufnehmer die geformte Wellenwicklung 92 aufgenommen hat, fährt er aus den Formelementen 60, 76 heraus und kann von Hand entnommen werden oder mittels Rundtisch aus diesem Bereich herausschwenken.

Die beiden gezeigten Vorrichtungen haben den Vorteil, daß die Formelemente 14, 16 u. 60, 76 eine feste Kontur haben und nicht radial verfahrbare Teile aufweisen. Die Verformungskräfte werden von festen Nocken 34, 93 und Fingern 36, 94 aufgenommen. Ein weiteres besonderes Merkmal der Erfindung ist, daß der Wicklungsdraht von der Wickelebene 35, 84 über die Verformungsstrecke zum Spulenaufnehmer 20, 78 immer kontrolliert gehalten ist. So wie die gezeigten Windungen in Fig. 3 auf den ersten Formelementen 60 hintereinander geordnet sind, so bleiben diese auf der gesamten Strecke bis zum Spulenaufnehmer. Die einzelnen Durchmesser der Nocken 34, 93 und Finger 36, 94 der beiden Formelemente sind zueinander so abgestimmt, daß Windungen eines bestimmten Umfangsdurchmessers beim Formen in jeder axialen Teilabstreifstellung radial und axial gehalten sind. Der radiale Halt der Windungen erfolgt durch die beiden Formelemente und der axiale Halt erfolgt einerseits vom Abstreifer und andererseits von der Verformungsreibung, die nicht zuläßt, daß die Windungen axial in den Spulenaufnehmer von selbst hereinfallen. Dieses gewährleistet, daß die Windungen auch in die hierfür vorgesehenen Schlitze des Spulenaufnehmers abgestreift werden. Es ist auch möglich, insbesondere bei dünnen Drähten, mehrere Lagen zu wickeln und zu formen, so daß mehrere Windungen radial nebeneinander liegend verformt werden. Hierbei muß jedoch gewährleistet sein, daß die beiden Formelemente insbesondere im Bereich des Spulenaufnehmers so abgestimmt sind, daß nur die Breite einer Windungsmenge abgestreift wird, die auch zwischen die Schlitze des Spulenaufnehmers gelangen können.

## Patentansprüche

1. Verfahren zur Herstellung von Wellenwicklungen für Statore elektrischer Maschinen, wobei ein Windungsdraht auf im Kreis angeordneten Formelementen (14, 16, 60, 76) gewickelt wird und zwischen den ersten und zweiten Formelementen eine Wellenform erhält, **dadurch gekennzeichnet**, daß nach dem Wickeln mindestens einer Windung (48) ein Abstreifhub diese zwischen und axial entlang den ersten und den zweiten Formelementen (14,16,60,76) verschiebt, wobei zu jedem fortlaufenden Abstreifteilhub eine in der Wellenbildung sich verstärkende radiale Verformung der Windung (48) erfolgt.

2. Verfahren nach Anspruch 1, **dadurch gekennzeichnet**, daß die Windung (48) bei jeder fortlaufenden Abstreifteilhubstellung axial und radial geführt gehalten ist.

3. Verfahren nach Anspruch 2, **dadurch gekennzeichnet**, daß zwischen und axial entlang den beiden Formelementen (14,16,60,76) auf jeder neuen radialen Ebene der gleiche Umfang ist.

4. Verfahren nach Anspruch 1, **dadurch gekennzeichnet**, daß bei jedem fortlaufenden Abstreifteilhub die Windung (48) eine neue radiale Stellung einnimmt.

5. Verfahren nach Anspruch 3, **dadurch gekennzeichnet**, daß beim Wickeln solange ein kurzer Abstreifhub erfolgt bis die gesamte Wicklung gewickelt ist und anschließend ein Abschlußabstreifformhub erfolgt.

6. Verfahren nach Anspruch 3, **dadurch gekennzeichnet**, daß nach dem Wickeln einer kompletten Wicklung ein Abstreifformhub erfolgt.

7. Vorrichtung zur Durchführung des Verfahrens nach einem der Ansprüche 1 - 6, **dadurch gekennzeichnet**, daß nach dem Wickeln mindestens einer Windung (48) ein Abstreifer (18,70) diese zwischen und axial entlang den ersten und den zweiten Formelementen (14,16 u.60,76) verschiebt, wobei zu jeder fortlaufenden Abstreiferstellung eine in der Wellenbildung sich verstärkende radiale Verformung der Windung erfolgt.

8. Vorrichtung nach Anspruch 7, **dadurch gekennzeichnet**, daß nach dem Wickeln auf die ersten Formelemente (14,60) die Windung (48) mittels Abstreifer (18,70) axial innerhalb der zweiten Formelemente (16,76) abgestreift wird.

9. Vorrichtung nach Anspruch 8, **dadurch gekennzeichnet**, daß nach dem Wickeln die ersten Formelemente (60) mit den zweiten Formelementen (76) axial ineinander fahren.

10. Vorrichtung nach Anspruch 7, **dadurch gekennzeichnet**, daß die ersten Formelemente (14,60) und die zweiten Formelemente (16,76) während der Windungsverformung ortsfest stehen.

11. Vorrichtung nach Anspruch 10, **dadurch gekennzeichnet**, daß zwischen den beiden Formelementen (14,16,60,76) ein Mindestabstand von einem Windungsdrahtdurchmesser ist.

12. Vorrichtung nach Anspruch 10, **dadurch gekennzeichnet**, daß zwischen den beiden Formelementen (14,16,60,76) in dem Bereich der in den Aufnehmer (20,78) eintaucht, eine endgültige Form einer Wellenwindung ist.

13. Vorrichtung nach Anspruch 7, **dadurch gekennzeichnet**, daß zwischen zwei Nocken (34,93) ein Finger (36,94) angeordnet ist.

14. Vorrichtung nach Anspruch 7, **dadurch gekennzeichnet**, daß axial entlang den beiden Formelementen (14,16,60, 76) zwischen den Nocken (34,93) und Fingern (36,94) auf jeder neuen radialen Ebene der gleiche Umfang ist.

15. Vorrichtung nach Anspruch 14, **dadurch gekennzeichnet**, daß die Finger (36,94) an einem Ring (38,96) zusammengefaßt sind.

16. Vorrichtung nach Anspruch 14, **dadurch gekennzeichnet**, daß zwischen den beiden Formelementen (14,16,60,76) eine Abstreiferplatte (70) axial verschiebbar ist.

17. Vorrichtung nach Anspruch 14, **dadurch gekennzeichnet**, daß Abstreiferblätter (98) sich in den Nocken (93) und in den Fingern (94) zwischen den einzelnen Durchmessern (84,86,88, 90) erstrecken.

## Claims

1. Method for manufacturing series windings for stators used in electrical machinery, in which a coil wire is wound on die elements (14, 16, 60, 76) arranged in a circle and formed to an undulated shape between the first and second die elements, characterised in that after at least one turn (48) has been wound a stripping stroke pushes it between and axially along the first and second die elements (14, 16, 60, 76), whereby with each ensuing partial stroke of the stripping action an increasing radial shaping of the turn (48) is generated.

2. Method as claimed in claim 1, characterised in that with each ensuing partial stroke position of the stripping action the turn (48) is axially and radially guided and retained.

3. Method as claimed in claim 2, characterised in that the circumference between and axially along the two die elements (14, 16, 60, 76) is the same in each new radial plane.

4. Method as claimed in claim 1, characterised in that with each ensuing partial stroke of the stripping action, the turn (48) assumes a new radial position.

5. Method as claimed in claim 3, characterised in that a short stripping stroke is generated during winding until the entire winding has been wound and a final stripping and shaping stroke is generated.

6. Method as claimed in claim 3, characterised in that after a complete winding has been wound, a stripping and shaping stroke is generated.

7. Device for implementing the method as claimed in one of claims 1 - 6, characterised in that after at least one turn (48) has been wound, it is pushed by a stripper (18, 70) between and axially along the first and the second die elements (14, 16 and 60, 76), whereby with each ensuing position of the stripper an increasing radial shaping of the turn is generated.

8. Device as claimed in claim 7, characterised in that after the winding process on the first die elements (14, 60), the turn (48) is axially stripped from inside the second die elements (16, 76) by means of strippers (18, 70).

9. Device as claimed in claim 8, characterised in that after winding, the first die elements and the second die elements move axially inside one another.

10. Device as claimed in claim 7, characterised in that the first die elements (14, 60) and the second die elements (16, 76) are immovably positioned during the turn shaping.

11. Device as claimed in claim 10, characterised in that there is a minimum distance of one coil wire diameter between the two die elements (14, 16, 60, 76).

12. Device as claimed in claim 10, characterised in that a final shape of a series winding is arranged between the two die elements (14, 16, 60, 76) in the region that is inserted into the receiver (20, 78).

13. Device as claimed in claim 7, characterised in that a finger (36, 94) is arranged between two cams (34, 93).

14. Device as claimed in claim 7, characterised in that the circumference extending axially along the two die elements (14, 16, 60, 76) between the cams (34, 93) and fingers (36, 94) is the same with each new radial plane.

15. Device as claimed in claim 14, characterised in that the fingers (36, 94) are arranged together on a ring (38, 96).

16. Device as claimed in claim 14, characterised in that a stripper plate (70) is axially slidable between the two die elements (14, 16, 60, 76).

17. Device as claimed in claim 14, characterised in that stripper sheets (98) extend into the cams (93) and into the fingers (94) between the individual diameters (84, 86, 88, 90).

## Revendications

1. Procédé pour la fabrication d'enroulements ondulés pour des stators de machines électriques, un fil d'enroulement étant bobinés sur des éléments de mise en forme (14, 16, 60, 76) disposés en cercle pour obtenir une forme ondulée entre les premiers et seconds éléments de mise en forme, caractérisé en ce qu'après le bobinage d'au moins un enroulement (48), celui-ci est repoussé axialement le long et entre les premiers et seconds éléments de mise en forme (14, 16, 60, 76) par un mouvement de repousse, chaque mouvement partiel continu de repousse provoquant une déformation radiale de l'enroulement (48), renforçant la formation de l'ondulation.

2. Procédé selon la revendication 1, caractérisé en ce que l'enroulement (48) est maintenu dans son guidage radial et axial à chaque position de repousse partielle continue.

3. Procédé selon la revendication 2, caractérisé en ce qu'entre et axialement le long des deux éléments de mise en forme (14, 16, 60, 76), il y a la même périphérie sur chaque nouveau plan radial.

4. Procédé selon la revendication 1, caractérisé en ce qu'à chaque mouvement partiel continu de repousse, l'enroulement (48) prend une nouvelle position radiale.

5. Procédé selon la revendication 3, caractérisé en ce que lors du bobinage, un mouvement partiel court de repousse est effectué jusqu'à ce que l'enroulement soit complètement bobiné et qu'ensuite il se produise un mouvement final de mise en forme de repousse.

6. Procédé selon la revendication 3, caractérisé en ce qu'après le bobinage d'un enroulement complet, un mouvement de repousse de mise en forme est effectué.

7. Dispositif pour la mise en oeuvre du procédé selon l'une des revendications 1 - 6, caractérisé en ce qu'après le bobinage d'au moins un enroulement (48), un repousseur (18, 70) déplace ce dernier entre et le long des premiers et seconds éléments de mise en forme (14, 16 et 60, 76), de sorte qu'à chaque position continue du repousseur, l'enroulement subit une déformation radiale, renforçant la formation des ondulations.

8. Dispositif selon la revendication 7, caractérisé en ce qu'après le bobinage sur les premiers éléments de mise en forme (14, 60), l'enroulement (48) est repoussé au moyen du repousseur (18, 70), axialement à l'intérieur des seconds éléments de mise en forme (16, 76).

9. Dispositif selon la revendication 8, caractérisé en ce qu'après le bobinage, les premiers éléments de mise en forme (60) rentrent axialement dans les seconds éléments de mise en forme (76).

10. Dispositif selon la revendication 7, caractérisé en ce que les premiers éléments de mise en forme (14, 60) et les seconds éléments de mise en forme (16, 76) sont immobiles pendant la déformation de l'enroulement.

11. Dispositif selon la revendication 10, caractérisé en ce qu'entre les deux éléments de mise en forme (14, 16, 60, 76), il est prévu une distance minimale de la dimension d'un diamètre de fil d'enroulement.

12. Dispositif selon la revendication 10, caractérisé en ce qu'entre les deux éléments de mise en forme (14, 16, 60, 76), la forme définitive d'un enroulement ondulé se trouve dans la zone qui pénètre dans l'entraîneur (20, 78).

13. Dispositif selon la revendication 7, caractérisé en ce qu'entre deux cames (34, 93) est disposé un doigt (36, 94).

14. Dispositif selon la revendication 7, caractérisé en ce que la périphérie est la même axialement le long des deux éléments de mise en forme (14, 16, 60, 76), entre les cames (34, 93) et les doigts (36, 94) et, ce, sur chaque nouveau plan radial.

15. Dispositif selon la revendication 14, caractérisé en ce que les doigts (36, 94) sont rassemblés au niveau d'une bague (38, 96).

16. Dispositif selon la revendication 14, caractérisé en ce qu'entre les deux éléments de mise en forme (14, 16, 60, 76), une plaque de repousseur (70) est mobile axialement.

17. Dispositif selon la revendication 14, caractérisé en ce que des palettes de repousseur (98) s'étendent dans les cames (93) et dans les doigts (94) entre chacun des diamètres (84, 86, 88, 90).
